# EUROPÄISCHE PATENTSCHRIFT

(11) **EP 2 952 937 B1**
(45) Veröffentlichungstag und Bekanntmachung des Hinweises auf die Patenterteilung: **23.11.2016**
(21) Anmeldenummer: 15169663.0
(22) Anmeldetag: 28.05.2015
(51) Int. Cl.: G01V 8/20

(54) **DREHHALTERUNG FÜR EIN LICHTGITTER**
SWIVEL MOUNT FOR A LIGHT CURTAIN
SUPPORT ROTATIF POUR UNE BARRIÈRE LUMINEUSE

(30) Priorität: 03.06.2014 CH 8432014
(43) Veröffentlichungstag der Anmeldung: 09.12.2015
(73) Patentinhaber: ELESTA GmbH, 7310 Bad Ragaz (CH)
(72) Erfinder: Ambühl, Daniel, 7210 Felsberg (CH); Loop, Roger, 8894 Flumserberg-Saxli (CH)
(74) Vertreter: Riederer Hasler & Partner Patentanwälte AG

(56) Entgegenhaltungen:
- EP-A1- 2 645 397
- JP-A- 2005 340 139
- JP-A- 2013 218 892

## Beschreibung

### Technisches Gebiet

Die Erfindung betrifft eine Drehhalterung zur drehbaren Befestigung einer Vorrichtung zur Erfassung von Objekten in einem Überwachungsbereich, insbesondere eines Lichtgitters, an einer Oberfläche.

### Stand der Technik

Dem Anmelder sind folgende Dokumente bekannt: EP 1921370 A2, JP 10-74433, EP 1978378 A1, US 2005/0122590 A1, JP 2007-179990 und US 2003/0106992 A1. Soweit die darin offenbarten Drehhalterungen Lichtgitter betreffen, zeigen sie in der Mehrheit solche, die eine Befestigung an den Längsenden des zu montierenden Lichtgitters vorsehen. Derartige Drehhalterungen sind insofern unpraktisch, als sie bei der Montage zusätzlichen Platz im Bereich der genannten Längsenden benötigen, was bei begrenzten Platzverhältnissen Probleme verursacht. Zudem ist das Lichtgitter nach der Montage der Drehhalterung nicht mehr längsverschiebbar, was eine Justierung des Lichtgitters erschwert.

Die US 2003/0106992 A1 ist das einzige der vorgenannten Dokumente, welches eine Drehhalterung offenbart, welche im Abstand von den Enden des Lichtgitters mit diesem verbindbar ist. Die im genannten Dokument enthaltenen Lösungen sind - soweit sie überhaupt eine Arretierung des Lichtgitters in einer bestimmten Drehstellung erlauben - nicht sehr stabil und ermöglichen zudem keine beidseitige Drehung des Lichtgitters um 90 Grad. Bei Vorrichtungen zur Erfassung von Objekten in einem Überwachungsbereich, wie beispielsweise Lichtgittern, sind eine genaue Positionierung und Ausrichtung sowie eine stabile, d.h. schlag- und vibrationsunempfindliche Arretierung jedoch von besonderer Bedeutung.

Bei einer durch das Europäische Patentamt durchgeführten Recherche wurden zudem folgende Dokumente aufgefunden: JP 2005-340139, EP 2645397 A1 und JP 2013-218892.

Die Drehalterung gemäss JP 2005-340139 weist ein Verbindungsstück auf, das über zwei Schrauben mit dem Ende eines Lichtgitters verbindbar ist. Auf der dem Lichtgitter gegenüberliegenden Seite des Verbindungsstücks ist ein mit diesem fest verbundener kreisbogenförmiger Fortsatz vorgesehen, der scheinbar zwischen zwei Klemmflächen der Drehalterung klemmend aufnehmbar und dort in ungeklemmtem Zustand drehbar gelagert ist, was eine Drehung des Verbindungsstücks und damit des Lichtgitters erlaubt. Durch die notwendige Anordnung der Drehalterung am Ende des Lichtgitters ergibt sich ein erhöhter Platzbedarf hinsichtlich der Längsausdehnung. Bei beengten Platzverhältnissen kann dies das Anbringen eines Lichtgitters verunmöglichen oder zu einer verringerten Abdeckung des mittels des Lichtgitters zu überwachenden Bereichs führen.

Aus der EP 2645397 A1 ist eine Drehalterung für ein Lichtgitter bekannt, bei der zur Arretierung der Drehung eine Klemmung vorgesehen ist. Ein sich radial nach aussen erstreckender Fortsatz der Halterung wird dabei zwischen zwei Klemmflächen aufgenommen, wobei die Klemmflächen seitlich des Lichtgitters angeordnet und durch eine parallel zur Lichtgitterlängsachse bewegliche Schraube betätigbar sind. Der seitliche Platzbedarf ist durch diese Konstruktion erhöht, ausserdem ist die Schraube bei einer an einer Wand angebrachten Halterung mit darin aufgenommenem Lichtgitter schwer zugänglich.

Bei der Halterung gemäss JP 2013-218892 sind gegenläufig bewegbare, hakenförmige Haltemittel vorgesehen, deren Relativbewegung über eine Schraube gesteuert wird. Die Haltemittel dienen mutmasslich der Befestigung eines Lichtgitters, indem sie in Hinterschneidungen einer entlang des Lichtgittergehäuses verlaufenden Nut eingreifen. Eine Arretierbarkeit einer möglichen Drehung des Lichtgitters ist nicht ersichtlich.

### Aufgabe der Erfindung

Eine Aufgabe der vorliegenden Erfindung besteht darin, eine alternative Drehhalterung bereitzustellen. Die vorgeschlagene Drehhalterung soll eine platzsparende Montage ermöglichen und flexibel in Bezug auf die Positionierung und Ausrichtung der damit befestigten Vorrichtung sein.

Ausgestaltungsvarianten der Erfindung können bei Verwendung einer stabförmigen Vorrichtung, wie z.B. eines Lichtgitterstabs, einen oder mehrere der folgende Vorteile aufweisen: Eine stufenlose Drehbarkeit der Vorrichtung um ihre Längsachse, wobei eine Drehbarkeit um 180 Grad (oder ausgehend von einer Mittelposition 90 Grad in beide Drehrichtungen) vorgesehen sein kann; eine stufenlose, durch die Drehalterung geführte Verschiebbarkeit der Vorrichtung entlang ihrer Längsachse, wobei die Führung durch die Drehhalterung die Verschiebbarkeit der Vorrichtung auf eine Verschiebung in einer Ebene oder entlang einer Gerade einschränken kann; eine Höhenverstellbarkeit der Vorrichtung, d.h. eine Fixierbarkeit der Vorrichtung in verschiedenen Abständen von der Oberfläche.

Weitere Vorteile und Ziele der vorliegenden Erfindung ergeben sich aus der nachfolgenden Beschreibung.

### Darstellung der Erfindung

Die oben genannte Aufgabe wird gelöst durch eine Drehhalterung nach Anspruch 1.

Offenbart sei unter anderem eine Drehhalterung zur drehbaren Befestigung einer Vorrichtung an einer Oberfläche. Bei der Vorrichtung handelt es sich um eine solche zur Erfassung von Objekten in einem Überwachungsbereich, bevorzugt ein Lichtgitter. Die Drehhalterung beinhaltet:
- eine Basis mit Befestigungsmitteln zur Befestigung der Basis an der Oberfläche und mit zwei Klemmflächen, welche im Wesentlichen und/oder zum grössten Teil zwischen der Oberfläche und der Vorrichtung angeordnet sind,
- ein Verbindungselement, wobei das Verbindungselement relativ zur Basis um eine Drehachse drehbar mit der Basis verbunden ist und Befestigungsmittel zur Befestigung des Verbindungselements an der Vorrichtung aufweist, wobei
- die Basis vorzugsweise über zwei sich in Bezug auf eine rechtwinklig zur Oberfläche angeordnete, die Drehachse beinhaltende Ebene gegenüberliegende Gleitflächen mit dem Verbindungselement in Kontakt steht, und
- das Verbindungselement einen im Schnitt kreisbogenförmigen Fortsatz aufweist, welcher mit den zwei Klemmflächen der Basis eine Dreharretierung bildet.

Nachfolgend werden Merkmale beschrieben, wobei diese (individuell) als bevorzugte Merkmale zu betrachten sind, auch wenn sie nicht explizit als solche bezeichnet werden. Die Merkmale können separat (als Teil einer beliebigen Drehhalterung) oder - soweit sie sich nicht ausschliessen - in beliebiger Kombination verwirklicht sein. Dies schliesst vorzugsweise die Möglichkeit der gleichzeitigen Verwirklichung aller beschriebenen Merkmale ein.

Die zu befestigende Vorrichtung kann mit Vorteil ein Lichttaster oder eine Lichtschranke (z.B. ein Lichtgitter oder ein Lichtvorhang) sein. Von besonderem Interesse sind hierbei Lichtgitter.

Bei der Vorrichtung handelt es sich vorzugsweise um eine solche, die elektromagnetische Strahlung wie Licht oder Infrarot-Strahlung emittiert und/ oder detektiert. Eine derartige Vorrichtung kann einen oder mehrere Emitter elektromagnetischer Strahlen und/oder einen oder mehrere Sensoren zur Detektion dieser Strahlen aufweisen. Ein Emitter arbeitet dabei zweckmässigerweise mit einem oder mehreren Sensoren (derselben oder einer weiteren Vorrichtung) zur Erzeugung eines elektrischen Signals in Abhängigkeit der Präsenz eines Objekts im Überwachungsbereich der Vorrichtung zusammen. Die durch ein Objekt im Überwachungsbereich der Vorrichtung hervorgerufene Änderung der Intensität der vom Emitter emittierten Strahlung wird mittels des Sensors registriert und in ein Signal umgewandelt, bei dem es sich normalerweise um ein elektrisches Signal handelt. Das Signal kann anschliessend weiter verarbeitet werden, beispielsweise durch einen Mikroprozessor. Ausserdem besteht die Möglichkeit, dass in Abhängigkeit dieses Signals weitere Prozesse gesteuert werden, wie z.B. der Betriebszustand einer Vorrichtung, insbesondere einer Maschine. Ein gängiges Anwendungsgebiet für ein Lichtgitter ist z.B. die Sicherung einer Maschine, wobei die Maschine in Abhängigkeit der Präsenz eines Objekts im Überwachungsbereich des Lichtgitters ausgeschaltet, in einen ungefährlichen Betriebszustand überführt oder von der Umgebung isoliert wird (beispielsweise durch Verschliessen einer Zugangstüre).

Vorrichtungen, die mit der erfindungsgemässen Drehalterung besonders zweckmässig befestigbar sind, können im Wesentlichen stabförmig sein.

Besonders bevorzugt ist die Länge der Vorrichtung grösser als die Breite und/oder als die Dicke der Vorrichtung, insbesondere um mindestens den Faktor 2, 3 oder 5.

Die Breite und die Dicke der Vorrichtung können sich vorteilhaft um weniger als einen Faktor 5 oder 3 unterscheiden.

Die Vorrichtung kann eine Länge von mindestens 5, 10, 20 oder 30 Zentimeter aufweisen.

Nach einer Ausgestaltung kann die Vorrichtung eine Vorderseite, eine der Vorderseite (in Bezug auf die Längsachse der Vorrichtung) gegenüberliegende Rückseite und zwei die Vorderseite und die Rückseite verbindende Seiten (erste Seite, zweite Seite) sowie zwei Enden aufweisen. Die Vorderseite und/ oder die Rückseite und/ oder die erste und die zweite Seite verlaufen bevorzugt entlang der Längsachse der Vorrichtung und besonders bevorzugt im Wesentlichen parallel zur besagten Längsachse. Die erste und die zweite Seite können sich zudem (in Bezug auf die Längsachse) gegenüberliegen. Bei mit der Drehalterung verbundener Vorrichtung kann die genannte Längsachse parallel zur Drehachse sein oder der Drehachse entsprechen (Ist eine Höhenverstellbarkeit gemäss einer weiter unten beschriebenen Ausgestaltungsvariante der Drehhalterung vorgesehen, so kann dies zumindest in einer möglichen Befestigungsposition der Vorrichtung gelten).

Zweckmässigerweise sind die Emitter oder Sensoren auf der Vorderseite der Vorrichtung angeordnet und/oder die Emission oder Detektion elektromagnetischer Strahlung erfolgt über die Vorderseite der Vorrichtung.

Die Drehhalterung weist eine Basis mit Befestigungsmitteln zur Befestigung an einer (z.B. im Wesentlichen planen) Oberfläche auf. Bei den Befestigungsmitteln kann es sich beispielsweise um durchgehende Öffnungen zur Aufnahme von Schrauben handeln, insbesondere um Langlöcher.

Die mit der Oberfläche zu verbindende und/oder in Kontakt tretende Seite der Basis soll als Unterseite bezeichnet werden. Wenn auf die Oberfläche Bezug genommen wird, um z.B. die Position bestimmter Teile der Drehhalterung zu definieren, so kann nach einer Ausgestaltung alternativ auch auf die Unterseite der Basis Bezug genommen werden (Da diesbezüglich die Berührungsfläche zwischen Oberfläche und Unterseite der Basis relevant ist, sind Oberfläche und Unterseite als Referenzpunkt gleichbedeutend).

Die Basis weist zwei Klemmflächen auf, welche relativ zueinander beweglich, insbesondere aufeinander zu und/oder voneinander weg bewegbar sein können. Die Bewegungsrichtung ist dabei mit Vorteil quer (insbesondere im Wesentlichen rechtwinklig) zur Drehachse und/oder zur Oberfläche ausgerichtet. Durch die Veränderung des Abstandes der Klemmflächen und deren klemmendes Zusammenwirken mit dem Fortsatz (und optional mit weiteren Teilen des Verbindungselements), kann die Drehbarkeit des Verbindungselements relativ zur Basis unterbunden werden. Besonders bevorzugt ist es, wenn die Klemmflächen dazu ausgebildet sind, den Fortsatz klemmend zwischen sich aufzunehmen.

Die Relativbewegung der Klemmflächen kann zweckmässigerweise mittels eines (ersten) Bedienelements, insbesondere eines manuell betätigbaren Bedienelements wie z.B. eine Schraube erfolgen. Die Basis weist bevorzugt ein solches Bedienelement auf, wobei dieses z.B. seitlich des Verbindungselements und/oder der Vorrichtung an der Basis angeordnet sein kann. Vorzugsweise ist das Bedienelement aus einer Richtung senkrecht zur Oberfläche zugänglich und/oder bedienbar.

Zusätzlich zum beschriebenen Bedienelement kann ein zweites Bedienelement vorgesehen sein, welches vorzugsweise dieselben Eigenschaften wie das beschriebene (erste) Bedienelement aufweist. Die beiden Bedienelemente können vorteilhaft auf zwei sich in Bezug auf das Verbindungselement und/oder die Vorrichtung gegenüberliegenden Seiten der Basis angeordnet sein.

Sind mehrere Bedienelemente vorgesehen, so ist es vorteilhaft, wenn das klemmende Zusammenwirken der Klemmflächen mit dem Fortsatz und die Unterbindung der Drehbarkeit des Verbindungselements relativ zur Basis durch die Bedienung eines Bedienelements (z.B. des ersten) und ohne die Bedienung des anderen Bedienelements (z.B. des zweiten) bewerkstelligt werden kann. Wenn bei der Montage nicht beide Bedienelemente gleich gut zugänglich sind, kann so das besser zugängliche Bedienelement gewählt werden.

Die Klemmflächen sind im Wesentlichen zwischen der Oberfläche und der Vorrichtung angeordnet. Dadurch sind die Klemmflächen bei Drehung der Vorrichtung kaum im Weg, was den maximalen Drehwinkel vergrössert.

Die Klemmflächen und/ oder der kreisbogenförmige Fortsatz und/ oder der durch die Klemmflächen gebildete Freiraum zur Aufnahme des kreisbogenförmigen Fortsatzes können sich nach einer bevorzugten Variante von einer Seite der Vorrichtung (und/ oder einer Seite der unten beschriebenen Ebene) zur anderen Seite der Vorrichtung (und/oder zur anderen Seite der unten beschriebenen Ebene) erstrecken, insbesondere entlang der Rückseite der Vorrichtung. Bei den genannten Seiten der Vorrichtung handelt es sich zweckmässigerweise um die erste Seite und die zweite Seite.

Nach einer Variante ist der kreisbogenförmige Fortsatz bei der Drehung um die Drehachse relativ zu den Klemmflächen auf einer Kreisbahn verschiebbar, wobei die beschriebenen Bedienelemente (insbesondere die Schraube) ausserhalb (insbesondere seitlich) des Verschiebungswegs und/oder ausserhalb des durch die Kreisbahn definierten Kreises oder Kreiszylinders angeordnet sind.

Mit Vorteil ist der Verschiebungsweg des kreisbogenförmigen Fortsatzes nicht und/ oder nicht durch die Bedienelemente begrenzt. Vorzugsweise ist das Verbindungselement (in ungeklemmtern Zustand des kreisbogenförmigen Fortsatzes und/oder im unarretierten Zustand) relativ zur Basis um die Drehachse drehbar, wobei die Drehung nicht und/oder nicht durch die Bedienelemente begrenzt ist.

Die Basis weist vorzugsweise zwei Gleitflächen auf, die sich in Bezug auf eine rechtwinklig zur Oberfläche angeordnete, die Drehachse beinhaltende Ebene gegenüberliegen. Die Basis steht über diese Gleitflächen mit dem Verbindungselement in Kontakt, vorzugsweise während der Drehung der Basis und/ oder im arretierten Zustand der Basis. Die Gleitflächen können mit Vorteil von der Oberfläche abgewandt und/oder der Vorrichtung zugewandt sein. Bevorzugt liegen sich die Gleitflächen in Bezug auf den der Oberfläche nächstliegenden Punkt des Verbindungselements gegenüber.

Zweckmässigerweise liegt das Verbindungselement auf den Gleitflächen auf und/oder die Gleitflächen sind zwischen der Oberfläche und dem Verbindungselement angeordnet.

Zwischen den zwei Gleitflächen kann die Basis eine Öffnung aufweisen, in die das Verbindungselement teilweise aufgenommen ist. Die Öffnung kann optional durchgehend sein und sich bis zur Oberfläche erstrecken. Dadurch ist eine stärkere Annäherung des Verbindungselements an die Oberfläche möglich.

Die zwei Gleitflächen können jedoch auch (z.B. über eine weitere Gleitfläche) miteinander verbunden sein und/oder sie können eine gemeinsame Gleitfläche bilden, die sich von einer Seite der genannten Ebene zur anderen Seite der genannten Ebene erstreckt.

Darüber hinaus ist es möglich, dass eine oder beide Gleitflächen (oder Teile davon) eine der beiden Klemmflächen, insbesondere die der Oberfläche nähere Klemmfläche bilden.

Eine der Klemmflächen, insbesondere die weiter von der Oberfläche entfernte Klemmfläche, kann sich von einer Seite der genannten Ebene bis zur anderen Seite der genannten Ebene erstrecken.

Die Klemmflächen der Basis können einen im Schnitt (rechtwinklig zur Drehachse) im Wesentlichen kreisbogenförmigen Freiraum zur Aufnahme des Fortsatzes bilden. Das durch diesen Kreisbogen definierte Kreissegment weist vorzugsweise eine geringere Fläche auf, als das Kreissegment, welches einerseits durch den vom Fortsatz definierten Kreis und anderseits die durch die erste Seite und/oder durch die zweite Seite und/oder durch die Rückseite der Vorrichtung definierte, den Kreis schneidende Gerade definiert ist. Dadurch ist eine verbesserte Drehbarkeit des Verbindungselements ermöglicht. Optional wird so erreicht, dass die erste Seite und/oder die zweite Seite und/oder die Rückseite bei einer Ausrichtung im Wesentlichen parallel zur Oberfläche noch über den Klemmflächen (d.h. weiter von der Oberfläche entfernt als die Klemmflächen) liegt.

Nach einer bevorzugten Ausgestaltung ist die Dreharretierung stufenlos und/ oder eine Arretierung (in Bezug auf die Drehung des Verbindungselements relativ zur Basis) ist in jeder (möglichen) Drehposition herstellbar.

Es ist zweckmässig, wenn die Klemmung durch die Klemmflächen kraftschlüssig und/oder reibschlüssig ist.

Optional können zudem Mittel zur Herstellung einer formschlüssigen Verbindung zwischen dem Verbindungselement und der Basis vorgesehen sein, welche eine Drehung des Verbindungselements relativ zur Basis verhindert. Es gibt unzählige, dem Fachmann bekannte Möglichkeiten, eine solche formschlüssige Verbindung zwischen zwei beweglichen Teilen herzustellen. Eine einfache Variante eines solchen Mittels beinhaltet Bohrungen an den (bei der Drehung) relativ zueinander beweglichen Teilen (z.B. an der Basis und am Verbindungselement) und einem in die Bohrungen aufnehmbaren Stift. An einem der beweglichen Teile können mehrere Bohrungen vorgesehen sein, die die Fixierung in unterschiedlichen Drehpositionen erlauben. Eine Bohrung an einem der beweglichen Teile kann jedoch auch erst angebracht werden, wenn die Drehposition für die Fixierung bestimmt ist. Eine formschlüssige Verbindung kann insbesondere für den Fall vorteilhaft sein, dass die kraftschlüssige Klemmung der beaufschlagten Belastung (Kräfte, Vibrationen, Schläge) nicht standhält und sich somit der Montagezustand ohne weitere Mittel verändern würde.

Das Verbindungselement ist relativ zur Basis um eine Drehachse drehbar und mit der Basis verbunden, insbesondere lösbar verbunden.

Es ist bevorzugt, dass das Verbindungselement um mindestens 140, 160 oder 175 Grad relativ zur Basis drehbar ausgebildet ist, vorzugsweise ohne dass Teile der Drehhalterung die Emission oder Detektion der elektromagnetischen Strahlung durch die Vorrichtung behindern, wenn sich das Verbindungselement in einer der beiden äussersten Drehstellungen (d.h. die Drehstellungen maximaler Drehung in eine der beiden Drehrichtungen) befindet.

Erfindungsgemäß weist das Verbindungselement eine Öffnung (insbesondere in Form einer Aussparung) auf, in die die Vorrichtung aufnehmbar ist.

Es ist von Vorteil, wenn das Verbindungselement so ausgebildet ist, dass es an der Rückseite und/oder an der ersten Seite und/oder an der zweiten Seite der Vorrichtung anliegt, wenn die Vorrichtung in die Öffnung aufgenommen ist.

Die Ausdehnung der Öffnung oder Aussparung kann im Wesentlichen der äusseren Ausdehnung der Vorrichtung (am Ort der Verbindung mit der Vorrichtung) entsprechen. Alternativ oder zusätzlich kann die Form der Öffnung oder Aussparung im Wesentlichen der äusseren Form der Vorrichtung (am Ort der Verbindung mit der Vorrichtung) entsprechen und/oder an diese angepasst sein.

Wenn auf die Vorrichtung oder Teile davon (erste Seite, zweite Seite, Rückseite) Bezug genommen wird, um z.B. die Position bestimmter Teile der Drehhalterung zu definieren, so kann nach einer Ausgestaltung alternativ auch auf die jeweilige (zum Kontakt mit der Vorrichtung oder den genannten Teilen der Vorrichtung vorgesehene) Kontaktfläche des Verbindungselements Bezug genommen werden, d.h. auf die Kontaktfläche zum Kontakt mit der Vorrichtung, die Kontaktfläche zum Kontakt mit der ersten Seite, die Kontaktfläche zum Kontakt mit der zweiten Seite oder die Kontaktfläche zum Kontakt mit der Rückseite.

Darüber hinaus weist das Verbindungselement Befestigungsmittel zur Befestigung an der Vorrichtung auf.

Nach einer Ausgestaltung können die Befestigungsmittel dazu ausgebildet sein, bei in die Öffnung aufgenommener Vorrichtung eine Rastverbindung mit der Vorrichtung herzustellen. Beispielsweise können die Befestigungsmittel federnde Elemente aufweisen, die einen Formschluss mit der Aussenseite der Vorrichtung bilden. Die Aussparung kann optional auch dergestalt ausgelegt sein (z.B. über Schnapphaken), dass die Vorrichtung formschlüssig vor einem ungewollten Herausfallen während der Montage gesichert ist.

Erfindungsgemäß befinden sich die Befestigungsmittel in der genannten Öffnung oder erstrecken sich die Befestigungsmittel in die genannte Öffnung des Verbindungselements hinein.

Nach einer bevorzugten Ausgestaltungsvariante kann das Verbindungselement (wie beschrieben) eine Öffnung in Form einer Aussparung aufweisen, in die die Vorrichtung aufnehmbar ist, wobei das Befestigungsmittel zur Befestigung des Verbindungselements an der Vorrichtung auf der Innenseite der Aussparung angeordnet und dazu ausgebildet ist, einen Teil der Vorrichtung zwischen sich (d.h. dem Befestigungsmittel, vorzugsweise dem weiter unten beschriebenen Gleitkörper) und einen weiteren Teil des Verbindungselements (z.B. der Innenwand der beschriebenen Aussparung) klemmend aufzunehmen, wobei das Befestigungsmittel zu diesem Zweck in die Aussparung hinein und/oder aus ihr heraus bewegbar ist.

Das Befestigungsmittel zur Befestigung des Verbindungselements an der Vorrichtung kann dazu ausgebildet sein, eine kraftschlüssige und/oder reibschlüssige Verbindung zwischen dem Verbindungselement und der Vorrichtung herzustellen, beispielsweise durch Klemmung.

Alternativ oder zusätzlich kann das Befestigungsmittel (oder ein zusätzliches Befestigungsmittel) zur Befestigung des Verbindungselements an der Vorrichtung dazu ausgebildet sein, eine formschlüssige Verbindung zwischen dem Verbindungselement und der Vorrichtung herzustellen. Eine solche formschlüssige Verbindung kann eine Bewegung der Vorrichtung entlang der Drehachse und/oder quer zur Drehachse verhindern oder hinsichtlich des Bewegungswegs begrenzen. Es gibt unzählige, dem Fachmann bekannte Möglichkeiten, eine solche formschlüssige Verbindung herzustellen. Eine einfache Variante kann zum Beispiel Absetzungen in einer Nut an der Vorrichtung beinhalten. Eine formschlüssige Verbindung kann insbesondere für den Fall vorteilhaft sein, dass die kraftschlüssige Verbindung der beaufschlagten Belastung (Kräfte, Vibrationen, Schläge) nicht standhält und sich somit der Montagezustand ohne weitere Mittel verändern würde.

Alternativ oder zusätzlich kann das Befestigungsmittel zur Befestigung des Verbindungselements an der Vorrichtung eine Führung bilden, die eine geführte Bewegung der Vorrichtung in eine Richtung auf die Oberfläche zu (vorzugsweise in die genannte Öffnung des Verbindungselements hinein) und in eine Richtung von der Oberfläche weg (vorzugsweise aus der genannten Öffnung des Verbindungselements heraus) ermöglicht, wobei die Bewegung in die besagten Richtungen vorzugsweise durch die Länge der Führung begrenzt ist. Bevorzugt ermöglicht das Befestigungsmittel eine Fixierung der Vorrichtung in einer beliebigen Stellung entlang der Führung. Beispielsweise kann das Verbindungselement als Teile eines solchen Befestigungsmittels eine Führung (z.B. ein Langloch) aufweisen, sowie ein entlang der Führung bewegliches Teil, das die Verbindung zur Vorrichtung herstellt. Das erwähnte bewegliche Teil kann optional (z.B. über eine Schraube) klemmend mit der Führung zusammenwirken, um die beschriebene Fixierung zu ermöglichen. Dies ist eine Variante, um die weiter unten im Zusammenhang mit einem unabhängig offenbarten Halter beschriebene Schrägstellung oder Höhenverstellbarkeit der Vorrichtung relativ zur Oberfläche zu ermöglichen.

Alternativ oder zusätzlich kann das Befestigungsmittel zur Befestigung des Verbindungselements an der Vorrichtung eine Drehung der Vorrichtung relativ zur Halterung um eine quer (insbesondere im Wesentlichen rechtwinklig) zur Längsachse der Vorrichtung ausgerichtete Drehachse und eine Fixierung der Vorrichtung in einer beliebigen Drehposition erlauben. Bevorzugt ist eine Drehung um einen Winkel von mindestens 1, 2 oder 4 und/ oder höchstens 10, 9 oder 8 Grad ermöglicht. Beispielsweise kann der weiter unten beschriebene Gleitkörper relativ zum Verbindungselement drehbar ausgebildet sein.

Besonders bevorzugt ist, wenn das Befestigungsmittel dazu ausgebildet ist, gleichzeitig (d.h. über die Bedienung desselben Bedienelements, z.B. einer Schraube) einerseits die beschriebene Fixierung in einer Stellung entlang der Führung und andererseits die weiter oben beschriebene klemmende Aufnahme eines Teils der Vorrichtung zwischen dem Befestigungsmittel und einen weiteren Teil des Verbindungselements zu bewirken.

Nach einer bevorzugten Ausgestaltung ermöglicht das Befestigungsmittel zur Befestigung des Verbindungselements an der Vorrichtung eine geführte Bewegung der Vorrichtung entlang der Drehachse, insbesondere im Wesentlichen parallel zur Drehachse und/oder im Wesentlichen parallel zur Längsachse der Vorrichtung. Alternativ oder zusätzlich definiert das Befestigungsmittel eine geführte Bewegung der Vorrichtung in einer Ebene oder entlang einer Geraden. Bevorzugt ermöglicht das Befestigungsmittel eine Fixierung der Vorrichtung in einer beliebigen Stellung (d.h. einer beliebigen Position der Vorrichtung relativ zum Verbindungselement) entlang des so definierten Bewegungspfads und/oder eine stufenlose Arretierung (in Bezug auf die Bewegung entlang des so definierten Bewegungspfads). Beispielsweise kann das Befestigungsmittel zur Befestigung des Verbindungselements an der Vorrichtung einen Gleitkörper aufweisen, der dazu ausgebildet ist, mit einer entlang der Aussenseite der Vorrichtung verlaufenden Führung (vorzugsweise einer Nut) zusammenzuwirken und so die beschriebene geführte Bewegung der Vorrichtung zu ermöglichen. Die Führung an der Aussenseite der Vorrichtung kann mit Vorteil entlang der Längsachsachse, insbesondere im Wesentlichen parallel zur Längsachse der Vorrichtung verlaufen.

Zusätzlich zum beschriebenen (ersten) Befestigungsmittel zur Befestigung der Vorrichtung am Verbindungselement kann ein zweites Befestigungsmittel zur Befestigung der Vorrichtung am Verbindungselement vorgesehen sein. Dieses besitzt zweckmässigerweise dieselben Eigenschaften wie das zuvor beschriebene (erste) Befestigungsmittel. Das erste und das zweite Befestigungsmittel können auf zwei in Bezug auf die Drehachse sich gegenüberliegenden Seiten des Verbindungselements angeordnet sein. Das erste Befestigungsmittel kann dazu ausgebildet sein, mit der ersten Seite der Vorrichtung zusammenzuwirken, während das zweite Befestigungsmittel dazu ausgebildet ist, mit der zweiten Seite der Vorrichtung zusammenzuwirken, um die beschriebene Befestigung der Vorrichtung zu bewirken.

Ganz allgemein ist es bevorzugt, wenn die Drehalterung und/ oder das Verbindungselement im Abstand (von z.B. mindestens 0.5,1,2,5 oder 10 Zentimetern) von den Enden (insbesondere den Längsenden) der Vorrichtung und/oder zwischen den besagten Enden mit der Vorrichtung verbindbar ist.

Das Verbindungselement weist einen im Schnitt im Wesentlichen kreisbogenförmigen Fortsatz auf, welcher mit den zwei Klemmflächen der Basis eine Dreharretierung bildet. Vorzugsweise ist der Fortsatz zwischen den zwei Klemmflächen der Basis aufgenommen und bildet zusammen mit den genannten Klemmflächen die Dreharretierung.

Der durch den Fortsatz definierte Kreis kann einen Durchmesser aufweisen, welcher grösser ist, als der Abstand der ersten Seite von der zweiten Seite der Vorrichtung.

Die beiden Enden des durch den Fortsatz definierten Kreisbogens können einen grösseren Abstand voneinander haben, als die zwei Seiten (erste Seite, zweite Seite) der Vorrichtung.

Nach einer bevorzugten Ausgestaltung umgreift das Verbindungselement und/oder der Fortsatz die Vorrichtung teilweise. Alternativ oder zusätzlich erstreckt sich das Verbindungselement und/oder der Fortsatz von der Rückseite der Vorrichtung bis zu den zwei Seiten (erste Seite, zweite Seite der Vorrichtung).

Bei einer Ausgestaltungsvariante kann vorgesehen sein, dass die beiden Enden des durch den Fortsatz definierten Kreisbogens einander zugewandt sind.

Die bevorzugte Länge des Kreisbogens kann z.B. folgendermassen definiert sein: Der vom Fortsatz definierte Kreisbogen kann einen Mittelpunktswinkel des Kreises definieren, welcher grösser als 90,120,180 oder 240 Grad und/oder kleiner als 360, 320 oder 280 Grad ist.

Eine der Klemmflächen kann weiter von der Oberfläche entfernt sein, als die andere, wobei die weiter von der Oberfläche entfernte Klemmfläche vorzugsweise auf die Oberfläche und/oder auf die der Oberfläche näherliegende Klemmfläche zu bewegbar ist.

Es kann vorgesehen sein, dass der Fortsatz sich in eine erste Richtung (insbesondere eine Richtung parallel zur Drehachse) erstreckt und das Verbindungselement optional zusätzlich zu diesem (ersten) Fortsatz einen im Schnitt kreisbogenförmigen zweiten Fortsatz aufweist, wobei der zweite Fortsatz sich vorzugsweise in eine der ersten Richtung entgegengesetzte zweite Richtung erstreckt. Der zweite Fortsatz kann eines oder mehrere der für den ersten Fortsatz beschriebenen Merkmale aufweisen, wobei es besonders bevorzugt ist, wenn der zweite Fortsatz (mit Ausnahme der Ausrichtung) dieselben Merkmale wie der erste Fortsatz aufweist, wobei dies auch Merkmale einschliesst, die das Zusammenwirken des Fortsatzes mit anderen Teilen der Drehalterung definieren (z.B. das Vorhandensein von Klemmflächen und deren Interaktion mit dem Fortsatz).

Offenbart sei zudem (sowohl unabhängig wie auch in Kombination mit den vorbeschriebenen Merkmalen) eine Halterung zur Befestigung einer Vorrichtung an einer Oberfläche. Bei der Vorrichtung handelt es mit Vorteil um eine Vorrichtung wie sie weiter oben beschrieben wurde, insbesondere ein stabförmiges Lichtgitter. Die Halterung beinhaltet: ein Befestigungsmittel zur Befestigung an der Oberfläche und ein Befestigungsmittel zur Befestigung an der Vorrichtung.

Die Halterung (oder das Zusammenwirken mehrerer solcher Halterungen) erlaubt vorzugsweise eine Fixierung der Vorrichtung in einer Stellung, in der ein Ende der Vorrichtung weiter von der Oberfläche entfernt ist, als das andere Ende der Vorrichtung und/oder in einer Stellung, in der die Längsachse der Vorrichtung in einem Winkel von mindestens 1, 2 oder 4 und/oder höchstens 10,9 oder 8 Grad zur Oberfläche ausgerichtet ist. Beispielsweise kann das Befestigungsmittel zur Befestigung der Halterung an der Vorrichtung eine Drehung der Vorrichtung relativ zur Halterung um eine quer (insbesondere im Wesentlichen rechtwinklig) zur Längsachse der Vorrichtung ausgerichtete Drehachse und eine Fixierung der Vorrichtung in einer beliebigen Drehposition erlauben.

Alternativ oder zusätzlich erlaubt die Halterung eine Fixierung der Vorrichtung in unterschiedlichen Abständen von der Oberfläche.

Es gibt eine Vielzahl von Möglichkeiten, das Vorbeschriebene zu erreichen. Beispielsweise kann das Befestigungsmittel zur Befestigung der Halterung an der Vorrichtung eine Führung bilden, die eine geführte Bewegung der Vorrichtung in eine Richtung auf die Oberfläche zu und in eine Richtung von der Oberfläche weg ermöglicht, wobei die Bewegung in die besagten Richtungen vorzugsweise durch die Länge der Führung begrenzt ist. Bevorzugt ermöglicht das Befestigungsmittel eine Fixierung der Vorrichtung in einer beliebigen Stellung entlang der Führung. Beispielsweise kann das Befestigungsmittel eine Führung (z.B. ein Langloch) aufweisen, sowie ein entlang der Führung bewegliches Teil, das die Verbindung zur Vorrichtung herstellt. Das erwähnte bewegliche Teil kann optional (z.B. über eine Schraube) klemmend mit der Führung zusammenwirken, um die beschriebene Fixierung zu ermöglichen. Weiter oben sind im Zusammenhang mit der Drehhalterung weitere bevorzugte Merkmale eines solchen Befestigungsmittels offenbart. Die Führung kann mit Vorteil linear sein.

Die Möglichkeit zur Schrägstellung der Vorrichtung relativ zur Oberfläche stellt eine vorteilhafte Funktionalität der Halterung dar, die unabhängig von anderen Merkmalen umsetzbar ist. Natürlich können die für die Halterung beschriebenen Merkmale aber auch mit den im Zusammenhang mit der Drehhalterung beschriebenen Merkmalen kombiniert werden.

Begriffe in diesem Dokument sollen bevorzugt so verstanden werden, wie sie ein Fachmann auf dem Gebiet verstehen würde. Sind im jeweiligen Kontext mehrere Interpretationen möglich, so sei vorzugsweise jede Interpretation individuell offenbart. Insbesondere für den Fall, dass Unklarheiten bestehen sollten, können alternativ oder ergänzend die in diesem Dokument aufgeführten bevorzugten Definitionen herangezogen werden.

Werden in diesem Dokument Merkmale unter Bezugnahme auf die Oberfläche definiert, so beziehen sich diese Angaben auf einen Zustand, in dem die Drehhalterung (oder die Halterung), insbesondere die Basis, mit der Oberfläche verbunden ist, und/oder auf eine mit der Oberfläche verbundene Drehalterung (oder Halterung), insbesondere Basis. Solche Merkmale können optional mit dem Zusatz "[...] bei mit der Oberfläche verbundener Basis [...]" versehen werden.

Werden in diesem Dokument Merkmale unter Bezugnahme auf die Vorrichtung definiert, so beziehen sich diese Angaben auf einen Zustand, in dem die Drehhalterung (oder Halterung), insbesondere das Verbindungselement, mit der Vorrichtung verbunden ist, und/oder auf eine bzw. ein mit der Vorrichtung verbundene Drehalterung (oder Halterung) oder ein solches Verbindungselement. Solche Merkmale können optional mit dem Zusatz[...] bei mit der Vorrichtung verbundenem Verbindungselement [...]" versehen werden.

Ist in diesem Dokument das Vorhandensein eines Gegenstands (z.B. ein Befestigungsmittel zur Befestigung der Basis an der Oberfläche etc.) erwähnt, so schliesst dies nicht das Vorhandensein zusätzlicher Gegenstände derselben Art aus. Anders ausgedrückt seien bei Erwähnung eines Gegenstands jeweils "mindestens ein" solcher Gegenstand und "ein oder mehrere" solcher Gegenstände offenbart. Einer, zwei, drei oder mehr oder sogar alle der zusätzlichen Gegenstände können optional dieselben Merkmale wie der eine Gegenstand aufweisen.

Wenn in diesem Dokument davon die Rede ist, dass eine bestimmte Funktion "ermöglicht" wird, so sei auch offenbart, dass der Gegenstand, für welchen die Funktion ermöglicht ist oder welcher die Funktion ausführt, dazu ausgebildet ist, die Funktion auszuführen.

Die nachfolgenden Patentansprüche seien zusätzlich jeweils mit einem Rückbezug auf jeden beliebigen der vorhergehenden Patentansprüche ("nach einem der vorhergehenden Ansprüche") offenbart, auch wenn sie nicht in dieser Form beansprucht sind.

### Kurze Beschreibung der Zeichnungen

Es zeigt in schematischer, nicht massstabsgetreuer Darstellung:
Fig. 1 eine perspektivische Ansicht einer Drehhalterung für ein Lichtgitter mit einem Verbindungselement und einer Basis;
Fig. 2 eine perspektivische Ansicht des Verbindungselements gemäss Figur 1;
Fig. 3 eine perspektivische Ansicht der Basis gemäss Figur 1, mit einem ersten und einem zweiten Klemmelement;
Fig.4 eine perspektivische Ansicht des zweiten Klemmelements gemäss Fig.3;
Fig.5 eine perspektivische Ansicht des ersten Klemmelements gemäss Fig.3;
Fig.6 eine perspektivische Ansicht zweier Drehhalterungen gemäss Fig.1 mit einem darin aufgenommenen Lichtgitter;
Fig.7 eine Seitenansicht der zwei Drehhalterungen gemäss Fig.6 mit dem darin aufgenommenen Lichtgitter;
Fig.8 ein Schnitt A-A durch eine der Drehalterungen mit darin aufgenommenem Lichtgitter gemäss Fig.7;
Fig.9 ein Schnitt B-B durch eine der Drehalterungen mit darin aufgenommenem Lichtgitter gemäss Fig.7;
Fig.10 fünf Drehstellungen der Drehhalterung gemäss Fig.1 mit darin aufgenommenem Lichtgitter (Ansicht entlang der Drehachse);
Fig.11 eine perspektivische Ansicht einer zweiten Ausführungsform einer Drehhalterung mit darin aufgenommenem Lichtgitter; und
Fig.12 eine Draufsicht auf die Drehalterung mit darin aufgenommenem Lichtgitter gemäss Fig.11.

### Ausführung der Erfindung

Die Erfindung wird nachfolgend anhand der Zeichnungen beispielhaft erläutert.

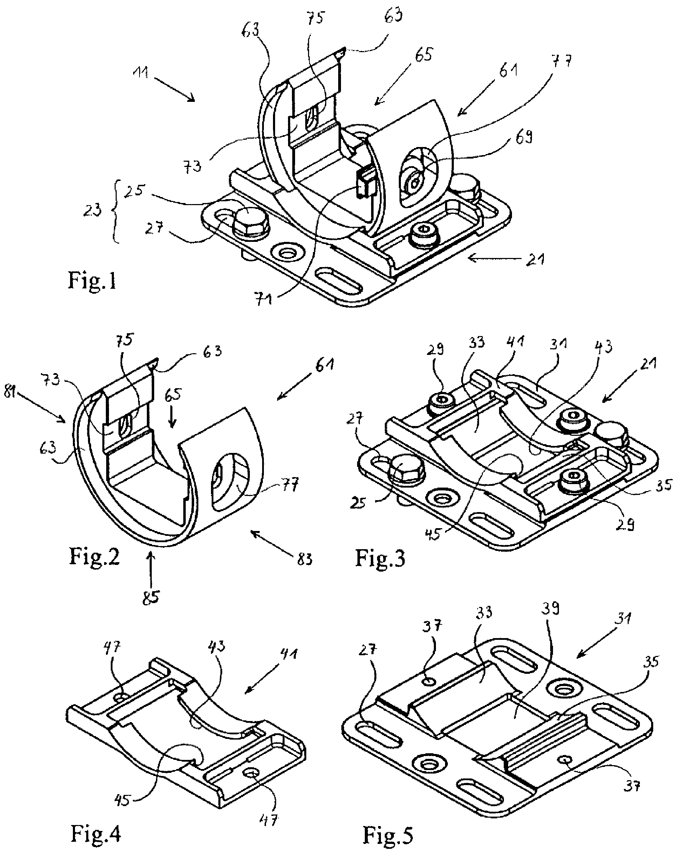

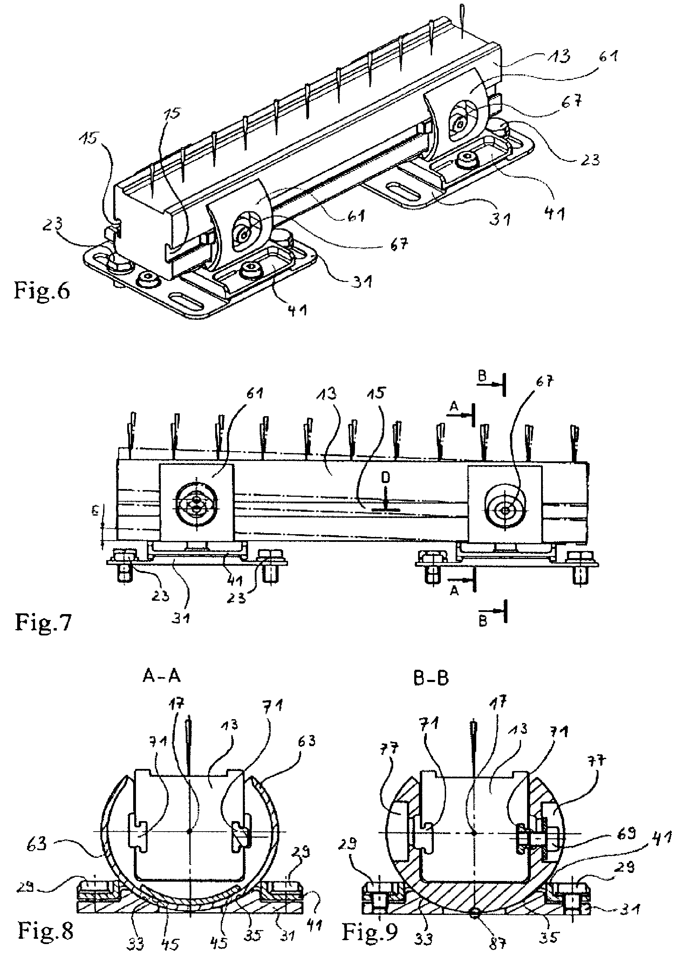

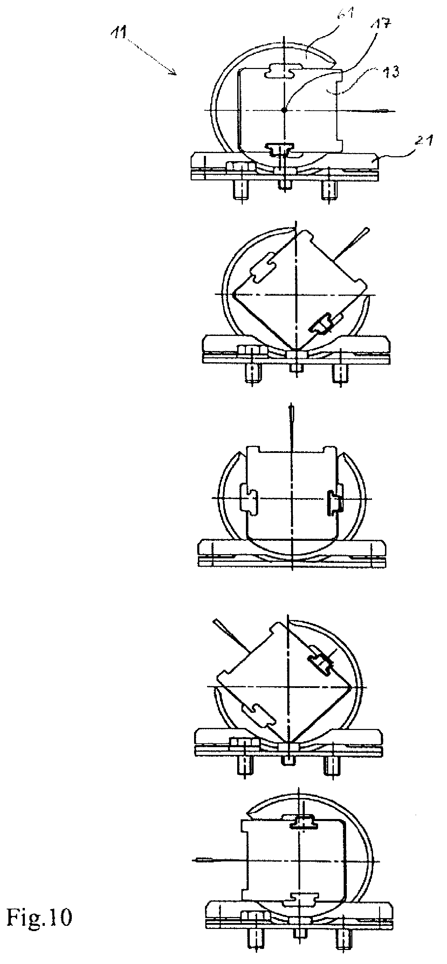

Die Fig.1 bis 10 stellen eine erste Ausführungsform einer erfindungsgemässen Drehhalterung 11 oder Teile davon dar. Die Drehhalterung 11 ist vollständig in Fig.1 gezeigt. Sie weist eine Basis 21 zur Verbindung mit einer Oberfläche und ein Verbindungselement 61 zur Verbindung mit einer Vorrichtung 13 (Fig. 6 - 10) auf, wobei das Verbindungselement 61 um eine Drehachse 17 drehbar mit der Basis 21 verbindbar ist. Bei der genannten Vorrichtung handelt es sich um eine Vorrichtung zur Erfassung von Objekten in einem Überwachungsbereich, vorzugsweise um einen Lichtgitterstab 13, wie er beispielsweise in den Fig.6 bis 10 dargestellt ist. Weil auch das Zusammenwirken der Vorrichtung 13 mit der Drehhalterung 11, insbesondere deren Verbindung, Teil der nachfolgenden Beschreibung ist, wird die Drehalterung 11 - soweit nichts anderes angegeben ist - im Zustand beschrieben, wenn die Vorrichtung 13 in die Drehhalterung 11 aufgenommen und/oder mit ihr verbunden ist.

Das Verbindungselement 61 ist isoliert in Fig.2 dargestellt. Es besitzt eine der äusseren Form der Vorrichtung 13 angepasste Öffnung 65, d.h. im vorliegenden Fall eine der Lichtgitterstabkontur angepasste Aussparung, zur Aufnahme der Vorrichtung 13. Die Öffnung 65 ist auf der Vorderseite des Verbindungselements 61, d.h. gegenüber einer Rückseite 85 des Verbindungselements 61, angeordnet. Die Vorrichtung 13 ist von der Vorderseite des Verbindungselements 61 her in die Öffnung 65 einführbar und dort über ein Befestigungsmittel 67 befestigbar. Das Verbindungselement 61 umgreift die Vorrichtung 13 und erstreckt sich zu diesem Zweck von der Rückseite der Vorrichtung 13 ausgehend (beidseitig) bis zu den parallel zur Drehachse 17 verlaufenden, einander gegenüberliegenden Seiten (erste Seite, zweite Seite) der Vorrichtung 13. Im gezeigten Beispiel erstreckt sich das Verbindungselement 61 und insbesondere der kreisbogenförmige Fortsatz 63 oder Abschnitt im Wesentlichen bis zur Vorderseite der Vorrichtung 13, was zwar vorteilhaft, aber nicht unbedingt notwendig ist. Das Verbindungselement 61 weist ein Befestigungsmittel 67 zur Verbindung mit der Vorrichtung 13 auf. Vorzugsweise ist das Befestigungsmittel 67 dazu ausgebildet, eine Verbindung mit einer der genannten Seiten der Vorrichtung 13 herzustellen, obwohl auch eine Verbindung mit der Rückseite der Vorrichtung 13 denkbar ist. Bei der Ausführungsvariante gemäss Fig.1 bis 10 ist jeweils ein Befestigungsmittel 67 auf jeder der beiden genannten Seiten der Vorrichtung 13 vorgesehen. Ein solches Befestigungsmittel 67 kann auf unterschiedliche Weise ausgestaltet sein. Eine zweckmässige Variante weist ein Loch (z.B. eine Bohrung), insbesondere ein Langloch 75, eine in das Loch 75 aufnehmbare Schraube 69 und einen T-Nutenstein 71 mit einer Gewindebohrung für die Aufnahme der Schraube 69 auf. Der Kopf der Schraube 69 ist optional in eine auf der Aussenseite des Verbindungselements 61 angebrachte Vertiefung 77 versenkt. Die Vorrichtung 13 besitzt entlang einer oder beider der oben erwähnten Seiten eine T-Nut 15, die dazu ausgebildet ist, mit dem T-Nutenstein 71 eines beschriebenen Befestigungsmittels 67 zur Befestigung der Vorrichtung 13 am Verbindungselement 61 zusammenzuwirken. Bei Verwendung der gezeigten Art von Befestigungsmittel 67 reicht ein Befestigungsmittel 67 pro Verbindungselement 61 für die Befestigung desselben an der Vorrichtung 13 im Prinzip aus, wobei das Vorsehen eines Lochs oder Langlochs 75 auf beiden Seiten 81 und 83 des Verbindungselements 61 die Flexibilität jedoch erhöht, weil der Monteur je nach den bei der Montage vorherrschenden Platzverhältnissen entscheiden kann, auf welcher Seite die Vorrichtung 13 mit dem Verbindungselement 61 verbunden oder ob allenfalls eine beidseitige Verbindung vorgenommen werden soll. Wie erwähnt können verschiedene Arten von Befestigungsmitteln 67 zur Befestigung der Vorrichtung 13 am Verbindungselement 61 eingesetzt werden. Die gezeigte Art hat jedoch eine Reihe von Vorteilen. Einerseits erlaubt sie es, dass die Vorrichtung 13 in einem ersten Schritt so mit dem Verbindungselement 61 verbindbar ist, dass sie zwar weiterhin entlang der Drehachse 17 verschiebbar bleibt, aber trotzdem eine Entnahme der Vorrichtung 13 aus der Öffnung 65 (in Richtung von der Oberfläche weg) verhindert ist. Das Langloch 75 erlaubt im genannten Zustand zudem eine Einstellung des Abstands der Vorrichtung 13 von der Basis 21 und/oder von der Oberfläche, wodurch sich ein Winkel zwischen der Längsachse der Vorrichtung 13 und der Drehachse 17 einstellen lässt, der grösser als 0 Grad ist und vorzugsweise zwischen 1 und 5 Grad beträgt. Anders ausgedrückt ist die Vorrichtung 13 von der Oberfläche weg kippbar, wie dies in Fig.7 gezeigt ist. Das Langloch 75 und die durch dieses ermöglichte Funktionalität (denn diese kann auch durch andere Mittel als durch ein Langloch hergestellt werden) sind jedoch optional und auch unabhängig voneinander und von der sonstigen Ausgestaltung der Drehhalterung verwendbar. Sobald die Vorrichtung 13 relativ zur Drehhalterung 11 in der vorgesehenen Betriebsstellung positioniert ist, kann in einem zweiten Schritt die Schraube 69 angezogen werden, wodurch die Vorrichtung 13 relativ zum Verbindungselement 61 unbeweglich am Verbindungselement 61 fixiert wird. Zudem verhindert die Vertiefung 77, dass Teile des Befestigungsmittels 67, insbesondere die Schraube 69, über das Verbindungselement 61 vorstehen und so die Drehung behindern, ohne dass andere Massnahmen ergriffen werden, um dies zu verhindern (z.B. eine Nut in der Basis 21, durch die sich vorstehende Teile des Befestigungsmittels 67 bei der Drehung bewegen können). Wie beschrieben, weist das Verbindungselement 61 einen im Wesentlichen kreisbogenförmigen Fortsatz 63 auf. Beim gezeigten Beispiel sind zwei solcher Fortsätze 63 vorgesehen, die sich in entgegengesetzte Richtungen und voneinander weg erstrecken. Die Fortsätze 63 sind dazu ausgebildet, mit den Klemmflächen 33/35 und 43/45 der Basis 21 zusammenzuwirken und mit diesen eine Dreharretierung zu bilden (zur Arretierung der Drehung des Verbindungselements 61 relativ zur Basis 21 um die Drehachse 17).

Die Basis 21 weist Befestigungsmittel 23 zur Verbindung mit einer Oberfläche (z.B. die Oberfläche einer Maschine oder eines Gebäudes), an der die Vorrichtung 13 angebracht werden soll, auf. Bei der gezeigten Ausgestaltungsvariante besitzt das Befestigungsmittel 23 ein Langloch 27 und eine darin aufnehmbare Schraube 25. Auch hier sind wiederum verschiedene Arten von Befestigungsmitteln einsetzbar, wobei das gezeigte den Vorteil hat, dass die Basis 21 in einem ersten Schritt so mit der Oberfläche verbindbar ist, dass sie zwar weiterhin parallel zur Oberfläche verschiebbar bleibt, aber trotzdem eine Entfernung der Basis 21 von der Oberfläche verhindert ist. Ist eine Position der Basis 21 eingestellt, kann anschliessend in einem zweiten Schritt die Schraube 25 angezogen und die Basis 21 so relativ zur Oberfläche unbeweglich an der Oberfläche fixiert werden. Die Basis 21 weist zwei Klemmflächen 33 und 35 auf, die auch als Gleitflächen dienen und mit dem Verbindungselement 61 während der Drehung um die Drehachse 17 in Kontakt stehen. Die Gleitflächen 33 und 35 sind vorzugsweise im Schnitt (Schnitt rechtwinklig zur Drehachse) ebenfalls kreisbogenförmig ausgestaltet. Sie sind beidseitig des der Oberfläche am nächsten liegenden Punktes 87 des Verbindungselements 61 angeordnet. Zwischen den Gleitflächen 33 und 35 ist eine optionale durchgehende Öffnung 39 in der Basis 21 vorgesehen, in die das Verbindungselement 61 eingesetzt werden kann, was eine grössere Annäherung des Verbindungselements 61 an die Oberfläche und damit eine kompaktere Bauweise erlaubt. Die Gleitflächen 33 und 35 könnten aber natürlich auch miteinander verbunden sein und zusammen eine Gleitfläche bilden. Neben den Gleitflächen 33 und 35, die auch als Klemmflächen dienen, weist die Basis 21 zwei weitere Klemmflächen 43 und 45 auf, die den Gleitflächen in Bezug auf die Fortsätze 63 gegenüberliegen und diese zwischen sich aufnehmen. Auf diese Weise bilden die Klemmflächen 33 und 35 und die ihnen gegenüberliegenden Klemmflächen 43 und 45 die oben beschriebene Dreharretierung. Wenn nur ein im Wesentlichen kreisbogenförmiger Fortsatz 63 vorgesehen ist, reicht natürlich neben den Gleitflächen 33 und 35 eine weitere Klemmfläche 43 oder 45 die zusammen mit einer der Gleitflächen 33 oder 35 die Dreharretierung bildet. Bevorzugt sind jedoch zwei Fortsätze 63 und pro Fortsatz zwei Klemmflächen. Im Beispiel gemäss den Fig.1 bis 10 bilden die Gleitflächen 33 und 35 gleichzeitig Klemmflächen und sind Teile eines ersten Klemmelements 31, wobei die den Klemmflächen 33 und 35 in Bezug auf die Fortsätze 63 gegenüberliegenden Klemmflächen 43 und 45 Teile eines zweiten Klemmelements 41 sind. Die beiden Klemmelemente 31 und 41 können aufeinander zu bewegt werden, um den Abstand zwischen den sich in Bezug auf die Fortsätze 63 gegenüberliegenden Klemmflächen zu verringern. Dies wird im Beispiel durch Schrauben bewerkstelligt, die in Bohrungen 47 des zweiten Klemmelements 41 und Gewindebohrungen 37 des ersten Klemmelements 31 aufgenommen sind. Durch Verringerung des genannten Abstands zwischen den gegenüberliegenden Klemmflächen können die Fortsätze 63 klemmend zwischen diese aufgenommen und das Verbindungselement 61 so relativ zur Basis 21 fixiert, d.h. die Drehbarkeit um die Drehachse 17 unterbunden werden.

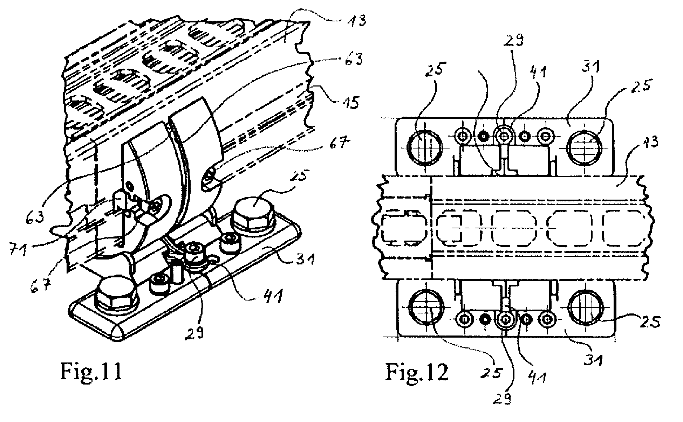

Die Variante gemäss den Fig.11 und 12 unterscheidet sich von derjenigen gemäss Fig.1 bis 10 im Wesentlichen durch die Position der Fortsätze 63 und Klemmflächen (nicht sichtbar). Die Fortsätze 63 sind statt voneinander weg (vgl. Fig.1-10) aufeinander zu gerichtet und befinden sich statt an den (in die beiden Richtungen der Drehachse gerichteten) Stirnseiten des Verbindungselements 61 (vgl. Fig.1-10) zwischen diesen Stirnseiten. Das zweite Klemmelement 41 ist bei dieser Variante in einem die Klemmflächen bildenden Abschnitt im Schnitt (Schnitt parallel zur Drehachse) im Wesentlichen T-förmig. Auch bei dieser Variante wäre im Prinzip ein Fortsatz 63 ausreichend und das zweite Klemmelement 41 könnte in diesem Fall z.B. auch im die Klemmflächen bildenden Abschnitt im Schnitt (Schnitt parallel zur Drehachse) im Wesentlichen L-förmig sein. Ein Vorteil der in den Fig.11 und 12 dargestellten Variante ist, dass die Löcher der Befestigungsmittel 67 zu einer Stirnseite des Verbindungselements 61 hin offen sind. Somit können der T-Nutenstein und die Schraube einfacher (z.B. auch in bereits miteinander verbundenem Zustand) in das Loch eingeführt werden. Im gezeigten Beispiel sind pro Seite des Verbindungselements 61 zwei Befestigungsmittel 67 vorgesehen, wobei unabhängig von der Ausgestaltungsvariante der Drehhalterung 11 gilt, dass ein Befestigungsmittel 67 pro Verbindungselement 61 oder pro Seite des Verbindungselements 61 ausreichend wäre, das Vorhandensein mehrerer Löcher oder Langlöcher (oder Befestigungsmittel) pro Verbindungselement 61 oder pro Seite des Verbindungselements 61 jedoch vorteilhaft sein kann.

### Bezugszeichenliste:

- 11: Drehhalterung
- 13: Vorrichtung
- 15: T-Nut
- 17: Drehachse
- 21: Basis
- 23: Befestigungsmittel (zur Verbindung mit einer Oberfläche)
- 25: Schraube
- 27: Langloch
- 29: Schraube
- 31: erstes Klemmelement
- 33: Gleitfläche / Klemmfläche
- 35: Gleitfläche / Klemmfläche
- 37: Bohrung
- 39: Öffnung
- 41: zweites Klemmelement
- 43: Klemmfläche
- 45: Klemmfläche
- 47: Bohrung
- 61: Verbindungselement
- 63: Fortsatz
- 65: Öffnung zur Aufnahme der Vorrichtung (Lichtgitter)
- 67: Befestigungsmittel (zur Verbindung mit der Vorrichtung)
- 69: Schraube
- 71: T-Nutenstein
- 73: Nut
- 75: Langloch
- 77: Vertiefung
- 81: (erste) Seite
- 83: (zweite) Seite
- 85: Rückseite
- 87: Punkt des Verbindungselements, der der Oberfläche am nächsten liegt

## Patentansprüche

1. Drehhalterung (11) zur drehbaren Befestigung einer Vorrichtung (13) zur Erfassung von Objekten in einem Überwachungsbereich, insbesondere eines Lichtgitters, an einer Oberfläche, wobei die Drehhalterung (11) beinhaltet:
- eine Basis (21) mit Befestigungsmitteln (23) zur Befestigung an der Oberfläche und mit zwei relativ zueinander bewegbaren Klemmflächen (43,45, 33,35), welche zwischen der Oberfläche und der Vorrichtung (13) anordenbar sind,
- ein Verbindungselement (61), wobei das Verbindungselement (61) relativ zur Basis (21) um eine Drehachse (17) drehbar mit der Basis (21) verbunden ist und Befestigungsmittel (67) zur Befestigung an der Vorrichtung (13) aufweist, wobei
- die Basis (21) über zwei sich in Bezug auf eine rechtwinklig zur Oberfläche angeordnete, die Drehachse (17) beinhaltende Ebene gegenüberliegende Gleitflächen (33,35) mit dem Verbindungselement (61) in Kontakt steht, und
- das Verbindungselement (61) einen im Schnitt kreisbogenförmigen Fortsatz (63) aufweist, welcher zwischen den zwei Klemmflächen (43,45,33,35) der Basis aufgenommen ist und mit den zwei Klemmflächen (43,45,33,35) der Basis (21) eine Dreharretierung bildet, **dadurch gekennzeichnet, dass** das Verbindungselement (61) eine Öffnung (65) aufweist, in die die Vorrichtung (13) aufnehmbar ist, wobei sich die Befestigungsmittel (67) in der Öffnung (65) befinden oder sich in die Öffnung (65) hinein erstrecken.

2. Drehhalterung nach Anspruch 1, **dadurch gekennzeichnet, dass** bei mit der Vorrichtung (13) verbundenem Verbindungselement (61) und bei mit der Oberfläche verbundener Basis (21) von den zwei Klemmflächen (43,45, 33,35) die weiter von der Oberfläche entfernte Klemmfläche (43,45) auf die Oberfläche und auf die der Oberfläche näherliegende Klemmfläche (33,35) zu bewegbar ist.

3. Drehhalterung nach einem der Ansprüche 1 bis 2, **dadurch gekennzeichnet, dass** der Fortsatz (63) dazu ausgebildet ist, die Vorrichtung (13) zumindest teilweise zu umgreifen, wobei die beiden Enden des durch den Fortsatz (63) definierten Kreisbogens dabei die Vorrichtung (13) zwischen sich aufzunehmen.

4. Drehhalterung nach einem der Ansprüche 1 bis 3, **dadurch gekennzeichnet, dass** der Fortsatz (63) sich in eine erste Richtung erstreckt und das Verbindungselement (61) zusätzlich zum Fortsatz (63) einen im Schnitt kreisbogenförmigen zweiten Fortsatz (63) aufweist, wobei der zweite Fortsatz (63) sich in eine der ersten Richtung entgegengesetzte zweite Richtung erstreckt.

5. Drehhalterung nach einem der Ansprüche 1 bis 4, **dadurch gekennzeichnet, dass** das Befestigungsmittel (67) zur Befestigung des Verbindungselements (61) an der Vorrichtung (13) dazu ausgebildet ist, einen in die Öffnung (65) aufgenommenen Teil der Vorrichtung (13) zwischen sich und einen weiteren Teil des Verbindungselements (61) klemmend aufzunehmen, um so die Befestigung des Verbindungselements (61) an der Vorrichtung (13) zu bewirken, wobei das Befestigungsmittel (67) zu diesem Zweck in die Öffnung (65) hinein und aus der Öffnung (65) heraus bewegbar ist.

6. Drehhalterung nach einem der Ansprüche 1 bis 5, **dadurch gekennzeichnet, dass** die Enden des durch den Fortsatz (63) definierten Kreisbogens einander zugewandt sind.

7. Drehalterung nach einem der Ansprüche 1 bis 6, **dadurch gekennzeichnet, dass** die Klemmflächen (43,45, 33,35) der Basis (21) einen im Schnitt kreisbogenförmigen Freiraum zur Aufnahme des Fortsatzes (63) definieren, wobei das durch den kreisbogenförmigen Freiraum definierte Kreissegment eine geringere Fläche aufweist, als das Kreissegment, welches durch den vom Fortsatz (63) definierten Kreis und die durch eine Seite der Vorrichtung (13) definierte, den Kreis schneidende Gerade definiert ist, wobei dies vorzugsweise sowohl für die Rückseite der Vorrichtung (13) wie auch für die entlang der Drehachse (17) verlaufenden, die Vorderseite und die Rückseite verbindenden Seiten der Vorrichtung (13) zutrifft.

8. Drehhalterung nach einem der Ansprüche 1 bis 7, **dadurch gekennzeichnet, dass** die Basis (21) ein die Annäherung der Klemmflächen (43,45, 33,35) kontrollierendes Bedienelement (29) aufweist, welches seitlich des Verbindungselements (61) und ausserhalb des durch den Fortsatz (63) definierten Kreises an der Basis (21) angeordnet ist.

9. Drehhalterung nach einem der Ansprüche 1 bis 8, **dadurch gekennzeichnet, dass** das Befestigungsmittel (67) zur Befestigung des Verbindungselements (61) an der Vorrichtung (13) eine Führung (75) bildet, die eine geführte Bewegung der Vorrichtung (13) in eine Richtung in die Öffnung (65) des Verbindungselements (61) hinein und in eine Richtung aus der Öffnung (65) des Verbindungselements (61) heraus definiert, wobei die Bewegung in die besagten Richtungen durch die Länge der Führung (75) begrenzt ist.

10. Drehhalterung nach einem der Ansprüche 1 bis 9, **dadurch gekennzeichnet, dass** das Befestigungsmittel (67) zur Befestigung des Verbindungselements (61) an der Vorrichtung (13) einen Gleitkörper (71) aufweist, der dazu ausgebildet ist, mit einer entlang der Drehachse (17) verlaufenden Nut (73) an der Vorrichtung (13) zusammenzuwirken und so eine geführte Bewegung der Vorrichtung (13) entlang der Drehachse (17) zu ermöglichen.

11. Drehhalterung nach Anspruch 1, **dadurch gekennzeichnet, dass** die Basis (21) zwischen den zwei Gleitflächen (33,35) eine Öffnung (39) aufweist, in die das Verbindungselement (61) teilweise aufgenommen ist.

12. Drehhalterung nach Anspruch 1, **dadurch gekennzeichnet, dass** die Drehhalterung (11) und/oder das Verbindungselement (61) im Abstand von den Enden der Vorrichtung (13) mit der Vorrichtung (13) verbindbar ist.

13. Drehhalterung nach Anspruch 1, **dadurch gekennzeichnet, dass** das Verbindungselement (61) eine Öffnung (65) aufweist, in die die Vorrichtung (13) aufnehmbar ist, wobei die Vorrichtung (13) eine Vorderseite, eine der Vorderseite in Bezug auf die Längsachse der Vorrichtung (13) gegenüberliegende Rückseite (85), eine erste und eine zweite die Vorderseite und die Rückseite (85) verbindende Seite (81,83) sowie zwei Enden aufweist, wobei das Verbindungselement (61) so ausgebildet ist, dass es an der Rückseite (85) und/oder an der ersten Seite (81) und/oder an der zweiten Seite (83) der Vorrichtung (13) anliegt, wenn die Vorrichtung (13) in die Öffnung (65) aufgenommen ist.

14. Drehhalterung nach Anspruch 13, **dadurch gekennzeichnet, dass** der durch den kreisbogenförmigen Fortsatz (63) definierte Kreis einen Durchmesser aufweist, welcher grösser ist, als der Abstand der ersten Seite (81) von der zweiten Seite (83) der Vorrichtung (13).

15. Drehhalterung nach Anspruch 1, **dadurch gekennzeichnet, dass** das Verbindungselement (61) um mindestens 140 Grad relativ zur Basis (21) drehbar ist.

## Claims

1. Rotating holder (11) for the rotary fixing of a device (13) for detecting objects in a monitoring area, in particular of a light grid, on a surface, whereby the rotating holder (11) contains:
- a base (21) with fixing means (23) for fixing on the surface and with two clamping surfaces movable the one relative to the other (43, 45, 33, 35) that can be placed between the surface and the device (13),
- a connecting element (61), whereby the connecting element (61) is connected to the base (21) rotatably relative to the base (21) about an axis of rotation (17) and has fixing means (67) for fixing to the device (13),
- whereby the base (21) is in contact with the connecting element (61) over two opposed sliding surfaces (33, 35) with respect to a plane containing the axis of rotation (17), placed at a right angle with the surface and
- the connecting element (61) has an extension (63) with a circular section that is received between the two clamping surfaces (43, 45, 33, 35) of the base and that constitutes with the two clamping surfaces (43, 45, 33, 35) of the base (21) an anti-rotation locking mechanism,
**characterized in that** the connecting element (61) has an opening (65) into which the device (13) can be received, whereby the fixing means (67) are in the opening (65) or extend into the opening (65).

2. Rotating holder according to claim 1, **characterized in that**, when the connecting element (61) is connected with the device (13) and when the base (21) is connected with the surface, from the two clamping surfaces (43, 45, 33, 35) the clamping surface (43, 45) that is further away from the surface can be moved to the surface and to the clamping surface (33, 35) that is closer to the surface.

3. Rotating holder according to one of the claims 1 to 2, **characterized in that** the extension (63) is configured to at least partly encompass the device (13), whereby both ends of the arc of circle defined by the extension (63) then receive the device (13) between them.

4. Rotating holder according to one of the claims 1 to 3, **characterized in that** the extension (63) extends into a first direction and the connecting element (61) has additionally to the extension (63) a second extension (63) with a circular section, whereby the second extension (63) extends into a second direction opposed to the first direction.

5. Rotating holder according to one of the claims 1 to 4, **characterized in that** the fixing means (67) for fixing the connecting element (61) on the device (13) is configured to receive by clamping a part of the device (13) received in the opening (65) between itself and a further part of the connecting element (61) in order to thus cause the fixing of the connecting element (61) on the device (13), whereby the fixing means (67) can be moved to this purpose into the opening (65) and out of the opening (65).

6. Rotating holder according to one of the claims 1 to 5, **characterized in that** the ends of the arc of circle defined by the extension (63) are turned to each other.

7. Rotating holder according to one of the claims 1 to 6, **characterized in that** the clamping surfaces (43, 45, 33, 35) of the base (21) define a free space with a circular section for receiving the extension (63), whereby the segment of circle defined by the circular free space has a smaller surface than the segment of circle that is defined by the circle defined by the extension (63) and the straight line defined by a side of the device (13) that cuts the circle, whereby this is the case preferably for the rear side of the device (13) as well as for the sides of the device (13) running along the axis of rotation (17) that connect the front side and the rear side.

8. Rotating holder according to one of the claims 1 to 7, **characterized in that** the base (21) has an operating element (29) that controls the approaching of the clamping surfaces (43, 45, 33, 35) that is placed on the base (21) laterally from the connecting element (61) and outside the circle defined by the extension (63).

9. Rotating holder according to one of the claims 1 to 8, **characterized in that** the fixing means (67) for fixing the connecting element (61) on the device (13) forms a guide (75) that defines a guided movement of the device (13) into a direction into the opening (65) of the connecting element (61) and into a direction out of the opening (65) of the connecting element (61), whereby the movement into said directions is limited by the length of the guide (75).

10. Rotating holder according to one of the claims 1 to 9, **characterized in that** the fixing means (67) for fixing the connecting element (61) on the device (13) has a sliding body (71) that is configured to cooperate with a groove (73) on the device (13) along the axis of rotation (17) and to thus enable a guided movement of the device (13) along the axis of rotation (17).

11. Rotating holder according to claim 1, **characterized in that** the base (21) has an opening (39) between the two sliding surfaces (33, 35) into which the connecting element (61) is partly received.

12. Rotating holder according to claim 1, **characterized in that** the rotating holder (11) and/or the connecting element (61) can be connected with the device (13) at a distance from the ends of the device (13).

13. Rotating holder according to claim 1, **characterized in that** the connecting element (61) has an opening (65) into which the device (13) can be received, whereby the device (13) has a front side, a rear side opposed to the front side with respect to the longitudinal axis of the device (13), a first and a second side (81, 83) that connects the front side and the rear side (85) as well as two ends, whereby the connecting element (61) is configured in such a way that it bears on the rear side (85) and/or on the first side (81) and/or on the second side (83) of the device (13), when the device (13) is received in the opening (65).

14. Rotating holder according to claim 13, **characterized in that** the circle defined by the circular extension (63) has a diameter that is bigger than the distance between the first side (81) and the second side (83) of the device (13).

15. Rotating holder according to claim 1, **characterized in that** the connecting element (61) is rotatable with respect to the base (21) about at least 140 degrees.

## Revendications

1. Support pivotant (11) pour la fixation rotative d'un dispositif (13) pour la détection d'objets dans une zone de surveillance, en particulier d'une grille lumineuse, sur une surface, cependant que le support pivotant (11) contient :
- une base (21) avec des moyens de fixation (23) pour la fixation sur la surface et avec deux surfaces de serrage mobiles l'une par rapport à l'autre (43, 45, 33, 35) qui peuvent être placées entre la surface et le dispositif (13),
- un élément de jonction (61), cependant que l'élément de jonction (61) est relié à la base (21) en étant rotatif autour d'un axe de rotation (17) par rapport à la base (21) et a des moyens de fixation (67) pour la fixation au dispositif (13),
- cependant que la base (21) est en contact avec l'élément de jonction (61) par deux surfaces de glissement opposées (33, 35) par rapport à un plan, placé à angle droit par rapport à la surface, qui contient l'axe de rotation (17) et
- l'élément de jonction (61) présente un prolongement de section en forme d'arc de cercle (63) qui est logé entre les deux surfaces de serrage (43, 45, 33, 35) de la base et qui forme un blocage de rotation avec les deux surfaces de serrage (43, 45, 33, 35) de la base (21),
**caractérisé en ce que** l'élément de jonction (61) présente une ouverture (65) dans laquelle le dispositif (13) peut être logé, cependant que les moyens de fixation (67) se trouvent dans l'ouverture (65) ou s'étendent à l'intérieur de l'ouverture (65).

2. Support pivotant selon la revendication 1, **caractérisé en ce que**, lorsque l'élément de jonction (61) est relié au dispositif (13) et lorsque la base (21) est reliée à la surface, la surface de serrage (43, 45) des deux surfaces de serrage (43, 45, 33, 35) qui est la plus éloignée de la surface peut être déplacée vers la surface et vers la surface de serrage (33, 35) qui est la plus proche de la surface.

3. Support pivotant selon l'une des revendications 1 à 2, **caractérisé en ce que** le prolongement (63) est configuré pour enserrer au moins partiellement le dispositif (13), cependant que les deux extrémités de l'arc de cercle défini par le prolongement (63) logent alors le dispositif (13) entre elles.

4. Support pivotant selon l'une des revendications 1 à 3, **caractérisé en ce que** le prolongement (63) s'étend dans une première direction et l'élément de jonction (61) présente, en plus du prolongement (63), un second prolongement (63) de section en arc de cercle, cependant que second prolongement (63) s'étend dans une seconde direction opposée à la première direction.

5. Support pivotant selon l'une des revendications 1 à 4, **caractérisé en ce que** le moyen de fixation (67) est configuré pour la fixation de l'élément de jonction (61) sur le dispositif (13) pour loger par serrage une partie du dispositif qui est logée dans l'ouverture (65) entre elle et une autre partie de l'élément de jonction (61) pour ainsi provoquer la fixation de l'élément de jonction (61) sur le dispositif (13), cependant que le moyen de fixation (67) est mobile, dans ce but, en entrant dans l'ouverture (65) et en ressortant de l'ouverture (65).

6. Support pivotant selon l'une des revendications 1 à 5, **caractérisé en ce que** les extrémités de l'arc de cercle défini par le prolongement (63) sont tournées l'une vers l'autre.

7. Support pivotant selon l'une des revendications 1 à 6, **caractérisé en ce que** les surfaces de serrage (43, 45, 33, 35) de la base (21) définissent un espace libre de section en arc de cercle pour loger le prolongement (63), cependant que le segment de cercle défini par l'espace libre de section en arc de cercle présente une surface moins importante que le segment de cercle qui est défini par le cercle défini par le prolongement (63) et la droite qui est définie par un côté du dispositif (13), qui coupe le cercle, cependant que ceci est valable de préférence aussi bien pour le côté arrière du dispositif (13) que pour les côtés du dispositif (13) qui sont le long de l'axe de rotation (17) et qui relient le côté avant et le côté arrière.

8. Support pivotant selon l'une des revendications 1 à 7, **caractérisé en ce que** la base (21) présente un élément de manoeuvre (29) qui contrôle le rapprochement des surfaces de serrage (43, 45, 33, 35) qui est placé sur le côté de l'élément de jonction (61) et sur la base (21) à l'extérieur du cercle défini par le prolongement (63).

9. Support pivotant selon l'une des revendications 1 à 8, **caractérisé en ce que** le moyen de fixation (67) forme, pour la fixation de l'élément de jonction (61) sur le dispositif (13), un guidage (75) qui définit un mouvement guidé du dispositif (13) dans une direction en entrant dans l'ouverture (65) de l'élément de jonction (61) et dans une direction en sortant de l'ouverture (65) de l'élément de jonction (61), cependant que le mouvement dans les directions mentionnées est limité par la longueur du guidage (75).

10. Support pivotant selon l'une des revendications 1 à 8, **caractérisé en ce que** le moyen de fixation (67) présente, pour la fixation de l'élément de jonction (61) sur le dispositif (13), un corps coulissant (71) qui est configuré pour coopérer avec une gorge (73) sur le dispositif (13) qui est le long de l'axe de rotation (17) et pour permettre ainsi un mouvement guidé du dispositif (13) le long de l'axe de rotation (17).

11. Support pivotant selon la revendication 1, **caractérisé en ce que** la base (21) présente une ouverture (39) entre les deux surfaces de glissement (33, 35) dans laquelle l'élément de jonction (61) est partiellement logé.

12. Support pivotant selon la revendication 1, **caractérisé en ce que** le support pivotant (11) et/ou l'élément de jonction (61) peut être relié au dispositif (13) en étant espacé des extrémités du dispositif (13).

13. Support pivotant selon la revendication 1, **caractérisé en ce que** l'élément de jonction (61) présente une ouverture (65) dans laquelle le dispositif (13) peut être logé, cependant que le dispositif (13) présente un côté avant, un côté arrière (85) opposé au côté avant par rapport à l'axe longitudinal du dispositif (13), un premier et un second côté (81, 83) qui relient le côté avant et le côté arrière (85) ainsi que deux extrémités, l'élément de jonction (61) étant configuré de telle manière qu'il s'appuie sur le côté arrière (85) et/ou sur le premier côté (81) et/ou sur le second côté (83) du dispositif (13) lorsque le dispositif (13) est logé dans l'ouverture (13).

14. Support pivotant selon la revendication 13, **caractérisé en ce que** le cercle défini par le prolongement en arc de cercle (63) présente un diamètre qui est plus grand que l'écart entre le premier côté (81) et le second côté (83) du dispositif (13).

15. Support pivotant selon la revendication 1, **caractérisé en ce que** l'élément de jonction (61) est rotatif par rapport à la base (21) d'au moins 140 degrés.
